# EUROPÄISCHE PATENTSCHRIFT

(11) **EP 2 362 172 B1**
(45) Veröffentlichungstag und Bekanntmachung des Hinweises auf die Patenterteilung: **11.09.2013**
(21) Anmeldenummer: 11152047.4
(22) Anmeldetag: 25.01.2011
(51) Int. Cl.: F26B 15/18, F26B 21/00, B65G 21/00

(54) **Transport- und Trocknungsstrecke für einzeln beförderte Artikel**
Transport and drying section for individually transported items
Section de transport et de séchage pour des articles individuels transportés

(30) Priorität: 25.02.2010 DE 102010000548
(43) Veröffentlichungstag der Anmeldung: 31.08.2011
(73) Patentinhaber: Krones AG, 93073 Neutraubling (DE)
(72) Erfinder: Hahn, Wolfgang, 93073 Neutraubling (DE)
(74) Vertreter: Benninger, Johannes

(56) Entgegenhaltungen:
- DE-B1- 1 404 553
- GB-A- 236 936
- US-A- 2 688 394
- US-A1- 2007 056 612

## Beschreibung

Die vorliegende Erfindung betrifft eine Transport- und Trocknungsstrecke für einzeln beförderte Artikel mit den Merkmalen des Oberbegriffs des unabhängigen Anspruchs 1.

Nach der Befüllung von Flaschen und Getränkebehältern mit der abgefüllten Flüssigkeit bzw. mit dem gewünschten Getränk werden die Behälter normalerweise verschlossen und weiteren Bearbeitungs- und Handhabungsschritten zugeführt. Eine dieser weiteren Handhabungsstationen kann bspw. eine Etikettierstation umfassen, bei der auf jeder Behältermantelfläche mindestens ein Etikett aufgebracht, insbesondere aufgeklebt, wird. Beim Aufkleben der Etiketten stören anhaftende Feuchtigkeit und Flüssigkeitstropfen jedoch, da sie zu Beeinträchtigungen der Hafteigenschaften führen können. Auch können Flüssigkeitstropfen unterhalb des aufgeklebten Etiketts zu dauerhaften optischen Beeinträchtigungen führen, zumal solche eingeschlossenen Feuchtigkeitsvolumina in der Regel nach dem Aufbringen der Etiketten nicht mehr entfernbar sind.

Neben dem Aufbringen von Etiketten können Flaschen und Getränkebehälter wahlweise auch bedruckt werden. Hierbei können wahlweise die zuvor aufgebrachten Etiketten eine Druckstation durchlaufen und eine vorhandene Bedruckung in gewünschter Weise ergänzt werden. Daneben sind auch Direktdruckverfahren bekannt, bei der mittels geeigneter Druckvorrichtungen die Mantelflächen der Behälter direkt bedruckt werden. Es ist nachvollziehbar, dass bei allen bekannten Druckverfahren Feuchtigkeitseinflüsse zu erheblichen Störungen und/oder Beeinträchtigungen sowohl des Druckverfahrens als auch des Druckergebnisses führen können, so dass trockene Behälter für ein einwandfreies Ergebnis unverzichtbar sind.

Um diese Nachteile zu vermeiden, werden die Behälter oder Flaschen in der Regel vor dem Aufbringen von Haftetiketten getrocknet. Um auf kurzem Weg und in kurzer Zeit ein gewünschtes Trocknungsergebnis gewährleisten zu können, eignen sich bspw. Blasstationen, bei denen die zu trocknenden Behälter mit warmer Luft angeblasen werden. Je nach Lufttemperatur, Luftvolumenstrom und Strömungsgeschwindigkeit lassen sich die Behälter auf relativ kurzen Wegen in der gewünschten Weise trocknen. Derartige Blasstationen sind in verschiedenen Ausführungsvarianten bekannt. Dem Fachmann sind verschiedene Möglichkeiten der Behältertrocknung geläufig, die mit die Behälter anströmender Warmluft funktionieren.

Die US 25 01 367 A zeigt eine Vorrichtung zur Trocknung von Artikeln, die mittels einer Förderkette entlang einer flach liegenden, langsam rotierenden Welle mit außen angeordnetem Schraubengewinde bewegt werden. Die Welle sorgt aufgrund der Gewindesteigung, die auf den Außendurchmesser der Artikel abgestimmt ist, für eine geeignete Unterteilung der Artikel und für deren gleichmäßige Drehung während ihres Längstransports, so dass eine gegenüber der Welle angeordnete Blasleiste für eine gleichmäßige Trocknung der Artikel über ihren gesamten Umfang sorgen kann.

Derartige Trocknungseinrichtungen liefern normalerweise gute Trocknungsergebnisse, erfordern jedoch in der Regel viel Bauraum und reduzieren zudem die erzielbaren Maschinentaktzeiten, so dass sie sich aufgrund der erzielbaren Durchsatzgeschwindigkeiten für viele schnell laufende Abfüll- und Verarbeitungsmaschinen nicht eignen. Andererseits haben sich bekannte Trocknungseinrichtungen als mängelbehaftet herausgestellt, da sie teilweise keine vollständige Trocknung und Abblasung anhaftender Feuchtigkeit ermöglichen.

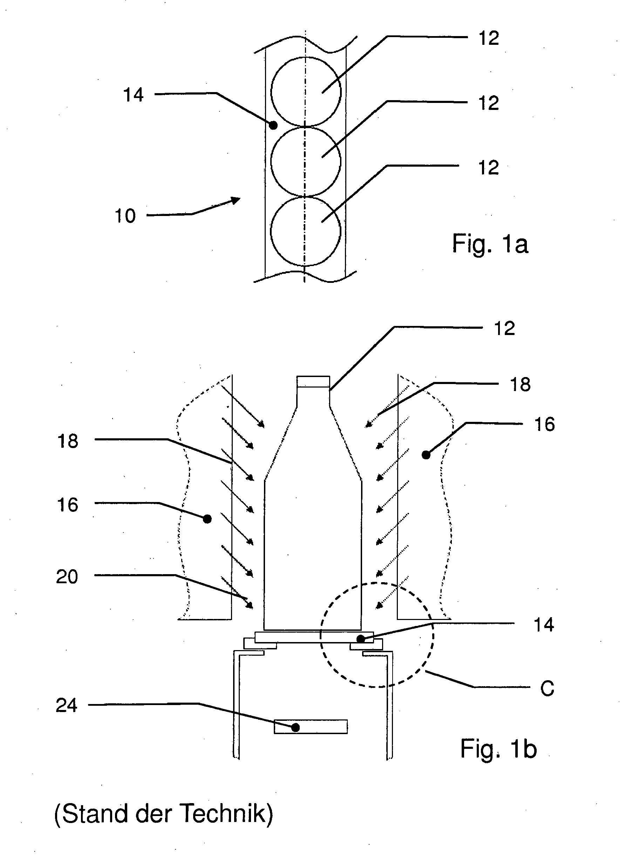

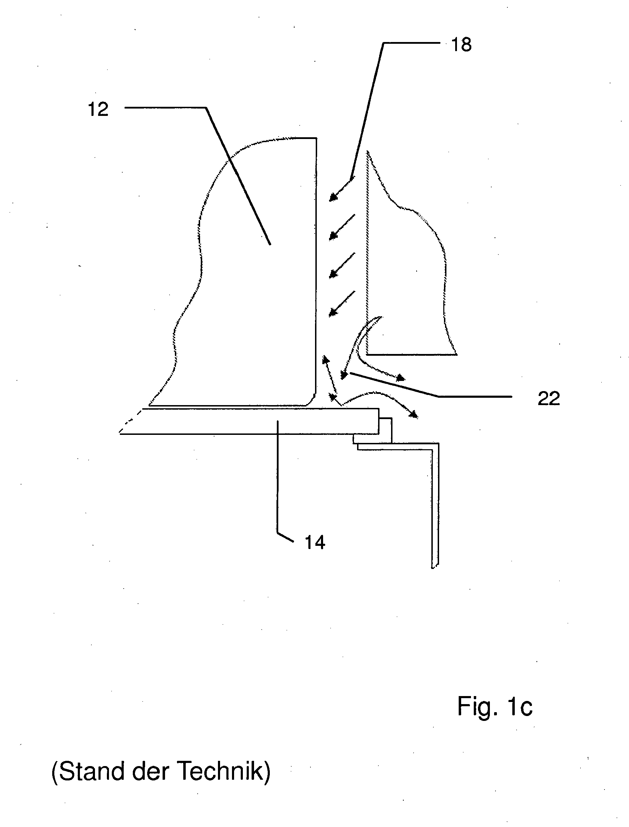

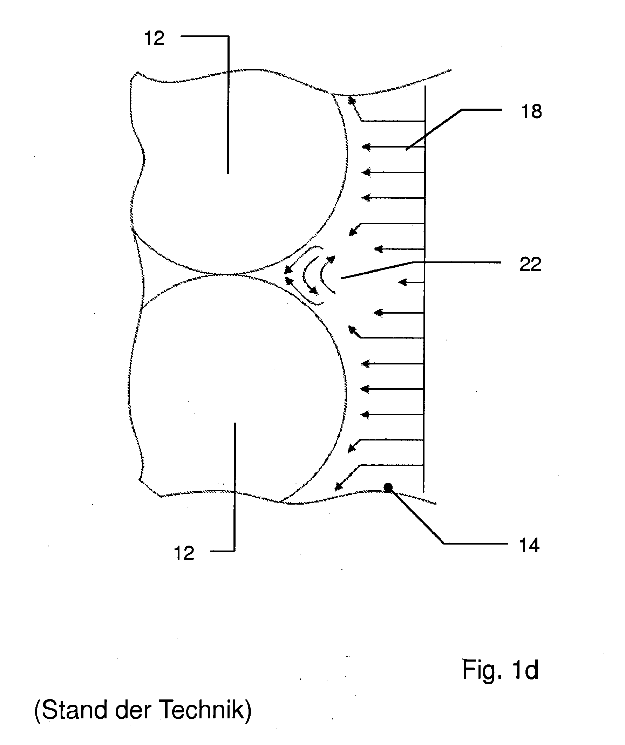

Die typischen Probleme bekannter Abblaseinrichtungen lassen sich anhand der Darstellungen der Fig. 1 (Figuren 1a bis 1d) verdeutlichen. Der bekannte Stand der Technik kann bspw. gemäß Fig. 1a eine durchgängige Reihe 10 von zu trocknenden Flaschen 12 vorsehen, die ohne jeweiligen Zwischenraum unmittelbar hintereinander auf einer Förderkette 14, einem Förderband, einem Mattenförderer oder einer anderen Horizontalfördereinrichtung stehen und nach einer Abfüllstation nach ihrem Verschließen getrocknet werden und von anhaftender Flüssigkeit und Feuchtigkeit möglichst vollständig befreit werden sollen, um in optimale Kondition für eine nachfolgende Behandlung gebracht zu werden, bspw. für eine nachfolgende Etikettierung oder Bedruckung o. dgl. Die schematische Draufsicht der Fig. 1b verdeutlicht die links und rechts in unmittelbarer Nähe der in horizontaler Richtung beförderten Flaschen 12 angeordneten Abblaseinrichtungen 16, die bspw. durch Düsenreihen oder durch Flachdüsen o. dgl. gebildet sein können. Die aus den Abblaseinrichtungen 16 kommende Luftströmung 18 ist normalerweise jeweils schräg nach unten gerichtet, wie dies in Fig. 1b durch die entsprechenden parallelen Pfeile links und rechts von den Flaschen 12 angedeutet ist. Die Darstellung der Fig. 1c verdeutlicht einen vergrößerten Ausschnitt C, der als Kreis in Fig. 1b gekennzeichnet ist. Die Luftströmung 18 wird im Bereich des Flaschenbodens 20 und am Rand der Förderkette 14 verwirbelt, wodurch auch anhaftende und von der Luftströmung 18 mitgerissene Feuchtigkeit verwirbelt und nicht vollständig nach unten abgeführt wird. Die verwirbelte Luft ist mit der Bezugsziffer 22 bezeichnet. Wie anhand der vergrößerten Draufsicht der Fig. 1d verdeutlicht ist, befindet sich der Bereich stärkster Verwirbelung zwischen den Behältern bzw. Flaschen 12. Die Blaseinrichtungen 16 befinden sich nahe an der Förderkette 14, um auch den unteren Bereich der Flaschen 12 zu erreichen. Stehen die Flaschen 12 nun auf einem der üblicherweise verwendeten Flaschentransporteur in Form einer Gliederband- bzw. Scharnierbandkette, hier generell als Förderkette 14 bezeichnet, so verdeutlicht Fig. 1b, dass das zurücklaufende Untertrum 24 (vgl. Fig. 1 b) des Förderbandes mit Wasser benetzt werden kann, das wieder auf die Oberseite 26 der Kette 14 verschleppt wird und erneut auf die Behälter bzw. Flaschen 12 gelangen kann.

Durch DE 1 404 553 B1 ist eine Transport- und Trocknungsstrecke für einzeln, zu mehreren gruppiert und/oder in größerer Anzahl hintereinander und/oder nebeneinander beförderte, zumindest teilweise mit außen anhaftender Feuchtigkeit und/oder Flüssigkeitstropfen beaufschlagte Artikel mit allen Merkmalen des Oberbegriffs des Anspruchs 1 bekannt. Die Artikel liegen auf einem Gliederförderer. Die Artikel sind seitlich und/oder von oben mit anströmender Trocknungsluft beaufschlagt. Dabei ist eine durch eine Strömungsleitflächen umfassende Absaugkammer gebildete, den rücklaufenden Teil des durch die Förderketten gebildeten Gliederförderers in Richtung zur Beaufschlagung mit Luft nach oben hin abschirmende Einhausung vorgesehen. Ferner findet eine Abstützung des die Artikel tragenden Abschnitts des Gliederförderers mittels als Führungsschienen ausgebildeter Distanzelemente auf einer Oberseite der von der Einhausung umfassten Absaugkammer bzw. auf den Strömungsleitflächen statt.

Ein Ziel der vorliegenden Erfindung besteht darin, eine verbesserte Trocknungswirkung für Behälter und Flaschen bei gleichzeitig möglichst hohem Transport- und Trocknungsdurchsatz zu erreichen.

Dieses Ziel der Erfindung wird mit dem Gegenstand des unabhängigen Patentanspruchs erreicht. Merkmale vorteilhafter Weiterbildungen der Erfindung ergeben sich aus den abhängigen Ansprüchen. Zur Erreichung des genannten Ziels sieht die Erfindung eine Transport- und Trocknungsstrecke für einzeln, zu mehreren gruppiert und/oder in größerer Anzahl hintereinander und/oder nebeneinander beförderten, zumindest teilweise mit außen anhaftender Feuchtigkeit und/oder Flüssigkeitstropfen beaufschlagten Artikeln vor, die jeweils nahe beieinander oder sich berührend auf einem geschobenen oder gezogenen Gliederförderer stehen und dabei mit seitlich und/oder von oben anströmender Trocknungsluft beaufschlagt werden. Der Gliederförderer bildet eine weitgehend ebene, sich bewegende Auflageebene für die Artikel, die zumindest teilweise durchlässig ist für die anströmende Trocknungsluft, so dass diese mitsamt der mitgerissenen Feuchtigkeit durch die Oberfläche des Gliederförderers hindurch nach unten abgeleitet wird. Zudem sind unterhalb des Gliederförderers bzw. an der Unterseite der Auflageebene Strömungsleitflächen zur Ableitung der feuchten, die Flüssigkeit der zu trocknenden Artikel tragenden Trocknungsluft angeordnet. Mit einer solchen Anordnung kann sichergestellt werden, dass weitgehend die gesamte nach unten geleitete Luft mit der darin enthaltenen Feuchtigkeit abgeleitet und abgeführt wird, ohne dass es zu unerwünschten Strömungseffekten im Bereich der Behälter, insbesondere im Bereich der Behälterböden, kommt.

Die Strömungsleitflächen sind Teil einer Einhausung bzw. eines abschirmenden Gehäuses für einen unterhalb einer Auflageebene für die Artikel zurücklaufenden Abschnitt des Gliederförderers. Das sog. Untertrum oder Leertrum des Gliederförderers - bspw. einer Gliederkette o. dgl. - ist dabei abgeschirmt und wird nicht dem abgeblasenen Wasser und der mit der Luftströmung mitgerissenen Feuchtigkeit ausgesetzt. Somit kann effektiv verhindert werden, dass die Förderkette abtropfendes oder aufgeschleudertes Wasser und/oder Restfeuchtigkeit wieder aufnimmt und an die darauf beförderten Behälter weitergibt. Der Gliederförderer ist so angeordnet und geführt, dass er in definiertem Abstand zu den Strömungsleitflächen bzw. der Einhausung angeordnet ist. Die mit Feuchtigkeit angereicherte Abblasluft kann auf diese Weise weitgehend ungehindert durch die Maschen und Lücken des Gliederförderers hindurchströmen und wird anschließend von den Strömungsleitflächen in geeigneter Weise abgeleitet. Die Führung in gewünschtem Abstand wird derart gewährleistet, dass der die Artikel tragende Abschnitt des Gliederförderers mittels geeigneter Distanzelemente auf einer Oberseite der Einhausung bzw. auf den Strömungsleitflächen abgestützt ist. Diese Distanzelemente können bspw. durch geeignete Gleitleisten, Schienensysteme, Führungselemente o. dgl. gebildet sein, die dem Gleiten der Förderkette möglichst wenig Reibungswiderstand entgegensetzen.

Gemäß der Erfindung weist die Einhausung eine dachförmige Oberseite auf, deren nach unten geneigte Oberflächen als Strömungsleitflächen sowie als Auflageflächen und Gleitflächen für die den Gliederförderer tragenden Distanzelemente fungieren. An der dachförmigen Oberseite der Einhausung ist vorzugsweise wenigstens eine Gleitschiene zur Führung der Distanzelemente angeordnet. Grundsätzlich kann die dachförmige Oberseite der Einhausung pultförmig gestaltet sein, so dass die Ableitung der Luft im Wesentlichen nur zur abfallenden Seite hin erfolgt. Ebenso möglich ist eine symmetrische Gestaltung mit einem mittig angeordneten First bzw. einer mittig verlaufenden Knickstelle und seitlich abfallenden Strömungsleitflächen, die für eine annähernd gleichmäßige Verteilung des Luftstroms zu beiden Seiten der Förderkette sorgen können.

Die Abstützung der Förderkette auf dem geneigten, gewölbten und/oder schräg nach unten abfallenden Strömungsleitflächen kann wie erwähnt mittels geeigneter Distanzelemente erfolgen, wahlweise auch mittels geeigneter Gleitschienen, die eine Abstützung auf der Einhausung bilden und gleichzeitig eine ausreichende Durchlässigkeit für den nach unten abzuleitenden Luftstrom bieten. Wahlweise können die geradlinig oder in Längsrichtung mäanderförmig ausgebildeten Gleitschienen mehrfach und/oder in regelmäßigen Abständen in Querrichtung unterbrochen ausgebildet sein, um das Ablaufen der Feuchtigkeit und das Abströmen der Luft nach unten nicht zu behindern. Die wenigstens eine Gleitschiene trägt den Gliederförderer und bildet gleichzeitig die Distanzelemente bzw. ist Bestandteil dieser Distanzelemente.

Die Erfindung wird nachfolgend anhand von Ausführungsbeispielen unter Bezugnahme auf die beiliegenden Zeichnungen näher erläutert. Die Figuren illustrieren und verdeutlichen nicht einschränkend zu verstehende Ausführungsbeispiele der vorliegenden Erfindung in ihren Details und Funktionen.
Fig. 1 zeigt in vier verschiedenen Ansichten eine aus dem Stand der Technik bekannte Transport- und Trocknungseinrichtung.
Fig. 2 zeigt in drei verschiedenen Ansichten eine erste Ausführungsvariante einer erfindungsgemäßen Transport- und Trocknungsstrecke.
Fig. 3 zeigt in zwei Ansichten eine alternative Ausführungsvariante der Transport- und Trocknungsstrecke.

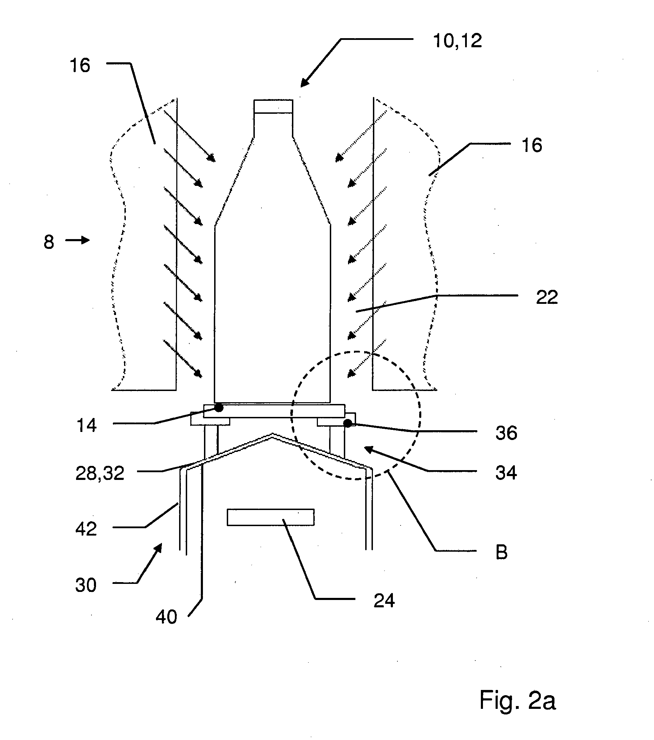

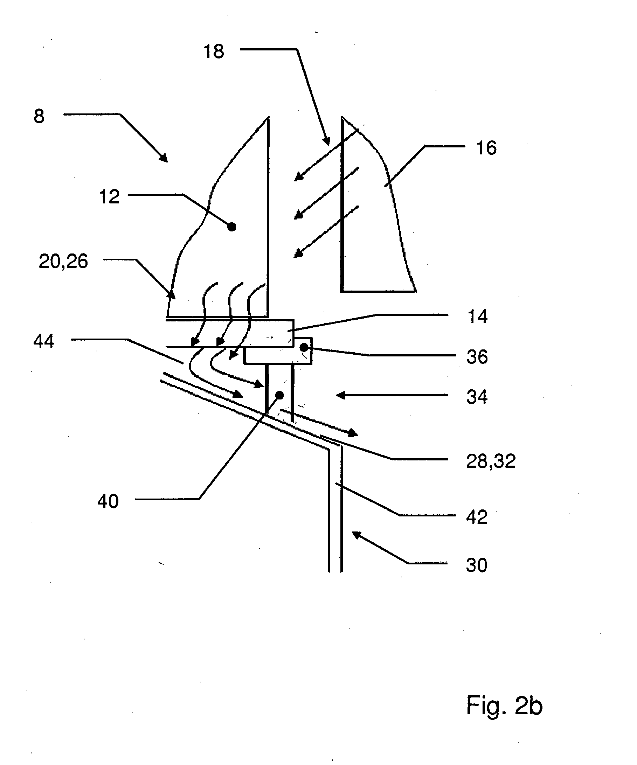

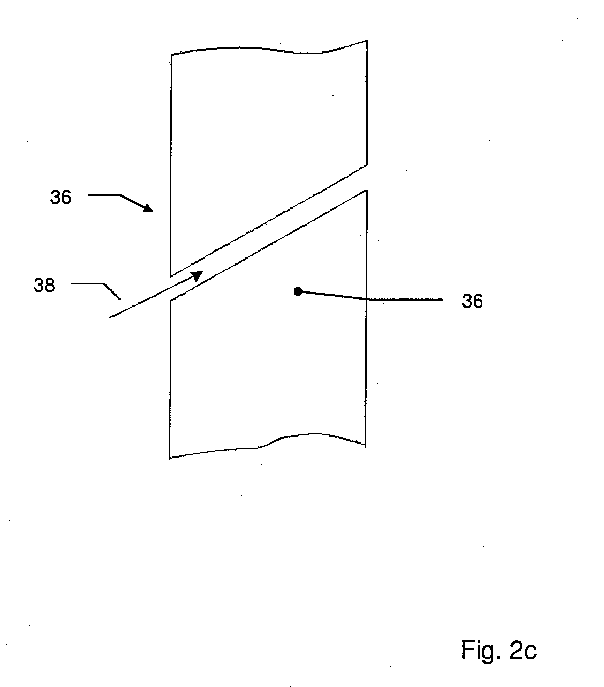

Die schematische Darstellung der Fig. 2 zeigt in drei verschiedenen Ansichten eine erste Ausführungsvariante einer erfindungsgemäßen Transport- und Trocknungsstrecke 8. Dort wird gemäß Fig. 2a eine durchgängige Reihe 10 von zu trocknenden Flaschen 12 mit oder ohne jeweiligen Zwischenraum unmittelbar hintereinander auf der Förderkette 14 befördert. Die Flaschen 12 laufen auf der Förderkette 14, die gemäß der vorliegenden Erfindung eine offene Struktur aufweist, nachdem sie eine Abfüllstation durchlaufen haben und anschließend verschlossen wurden. In der Transport- und Trocknungsstrecke 8 sollen die Flaschen 12 getrocknet und von anhaftender Flüssigkeit und Feuchtigkeit möglichst vollständig befreit werden, um bei einer nachfolgenden Behandlung Störungen aufgrund von Restfeuchtigkeit möglichst zu vermeiden. Nachfolgende Behandlungen können bspw. eine nachfolgende Etikettierung oder Bedruckung o. dgl. sein. Erkennbar sind weiterhin die links und rechts in unmittelbarer Nähe der in horizontaler Richtung beförderten Flaschen 12 angeordneten Abblaseinrichtungen 16, die bspw. durch Düsenreihen oder durch Flachdüsen o. dgl. gebildet sein können. Die aus den Abblaseinrichtungen 16 kommende Luftströmung 18 ist normalerweise jeweils schräg nach unten gerichtet, wie dies in Fig. 2b durch die auf die Außenmantelfläche in Richtung Flaschenboden 20 gerichteten parallelen Pfeile angedeutet ist. Die Darstellung der Fig. 2b verdeutlicht einen vergrößerten Ausschnitt B, der als Kreis in Fig. 2a gekennzeichnet ist.

Der als Förderkette 14 ausgebildete Gliederförderer, auf dessen Oberseite 26 die Flaschen 12 stehen und dabei mit seitlich und/oder von oben anströmender Trocknungsluft 18 beaufschlagt werden, bildet eine weitgehend ebene, sich bewegende Auflageebene für die Flaschen 12. Erfindungsgemäß ist die Förderkette 14 zumindest teilweise durchlässig für die anströmende Trocknungsluft 18, so dass diese mitsamt der mitgerissenen Feuchtigkeit durch die Oberseite 26 des Gliederförderers bzw. der Förderkette 14 hindurch nach unten abgeleitet wird. Unterhalb der Förderkette 14 sind Strömungsleitflächen 28 zur Ableitung der feuchten, die Flüssigkeit der zu trocknenden Flaschen 12 tragenden Trocknungsluft 18 angeordnet. Wie anhand der Fig. 2a verdeutlicht, sind die Strömungsleitflächen 28 Teil einer Einhausung 30 für den unterhalb der Auflageebene für die Flaschen 12 zurücklaufenden Abschnitt der Förderkette 14, deren sog. Untertrum 24. Die Einhausung 30 weist eine dachförmige Oberseite auf, deren nach unten geneigten Oberflächen 32 als Strömungsleitflächen 28 sowie als Auflageflächen und Gleitflächen für Distanzelemente 34 fungieren, welche die Förderkette 14 tragen. Die Einhausung 30 ist als nach oben abgeschlossenes Gehäuse ausgebildet, so dass die nach unten abgeblasene Feuchtigkeit nicht zum zurücklaufenden Untertrum 24 der Förderkette 14 gelangen und wieder nach oben zu nachfolgenden Flaschen 12 zurückgeleitet werden kann.

Wie anhand der Figuren 2a und 2b verdeutlicht, sind die Distanzelemente 34 mehrteilig ausgebildet. Zwei flache Gleitleisten 36 dienen der beidseitigen, randseitigen Auflage der Förderkette 14. Die beiden parallel geführten und passend zur Breite der Förderkette 14 voneinander beabstandeten Gleitleisten 36 sind vorzugsweise mehrfach unterbrochen, wie dies in Fig. 2c angedeutet ist. So können in kurzen Abständen mehrere schräg zur Längserstreckungsrichtung der Gleitleisten 36 angeordnete Trennstellen 38 vorgesehen sein, um der nach unten ablaufenden Feuchtigkeit einen möglichst geringen Widerstand entgegenzusetzen. Die Gleitleisten 36 sind jeweils über mehrere, vorzugsweise regelmäßig voneinander beabstandete Stützstempel 40 getragen, die sich auf den geneigten Oberflächen 32 der Einhausung 30 abstützen. Wie in Fig. 2a gezeigt, ist die Einhausung 30 symmetrisch gestaltet, so dass die geneigten Oberflächen 32 zu beiden Seiten eine gleiche Länge aufweisen und in gleichem Winkel geneigt sind. Der Neigungswinkel kann bspw. zwischen 5 Grad und 25 Grad betragen, bevor sich die senkrecht nach unten verlaufenden Seitenflächen 42 der Einhausung 30 anschließen. Die beiden geneigten Oberflächen 32 treffen sich mittig unterhalb der Mitte der Förderkette 14 in einer firstartigen Stoß bzw. Knickstelle. Vorzugsweise sind zwischen jeder der Trennstellen 38 jeder Gleitleiste 36 wenigstens zwei Stützstempel 40 vorgesehen, um einen stabilen Unterbau für die Förderkette 14 bilden zu können. Die Stützstempel 40 können bspw. einen zylindrischen Querschnitt mit einem Durchmesser von ca. 10 mm aufweisen. Die Gleitleisten 36 können je nach Bedarf eine Breite von ca. 10 mm bis 40 mm und eine Dicke von ca. 5 mm bis 20 mm aufweisen.

In der gezeigten Weise ist die Förderkette 14 in ausreichendem Abstand zu den Strömungsleitflächen 28 sowie der Einhausung 30 angeordnet, so dass sich der in Fig. 2b dargestellte Strömungsverlauf 44 mit der durch die Förderkette 14 zwischen den Gleitleisten 36 und den Stützstempeln 40 nahezu ungehindert abgeführten Feuchtigkeit ergibt. Gleichzeitig ist der Innenraum der Einhausung 30 zwischen den Oberflächen 32 und den senkrechten Seitenflächen 42 mitsamt dem darin geführten Untertrum 24 in optimaler Weise von dem Strömungsverlauf 44 und der abgeführten Feuchtigkeit abgeschirmt.

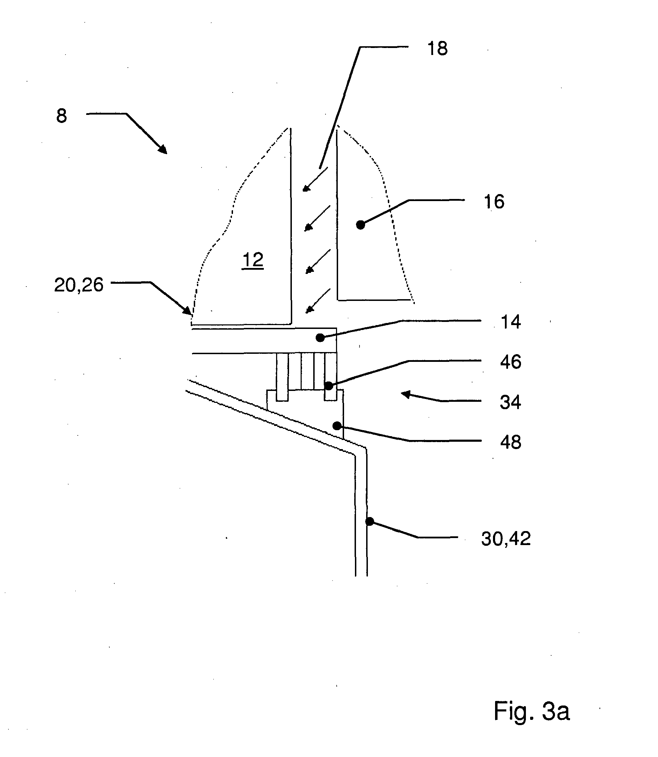

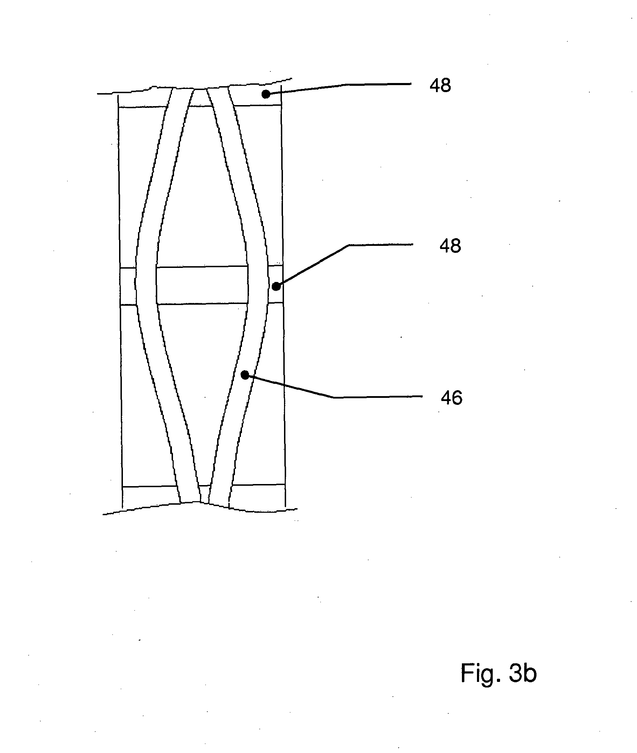

Die Darstellungen der Fig. 3 zeigen in zwei Ansichten eine alternative Ausführungsvariante der Transport- und Trocknungsstrecke 8. Hierbei sind die Distanzelemente 34 anders ausgebildet als bei der ersten Ausführungsvariante gemäß Fig. 2. Während dort die Gleitleisten 36 relativ flach und breit ausgebildet sind, sind bei der in Fig. 3 gezeigten Variante insgesamt vier Gleitleisten 46 in hochkant gestellter Anordnung vorgesehen, die jeweils paarweise randseitig der Förderkette 14 angeordnet sind. In der Detaildarstellung der Fig. 3a ist nur eine Seite der Distanzelemente 34 dargestellt. Wie in der Draufsicht der Fig. 3b verdeutlicht ist, können die paarweise angeordneten Gleitleisten 46 jeweils mäanderförmige Verläufe aufweisen, sowie wahlweise zusätzlich mehrfach und/oder in regelmäßigen Abständen in Querrichtung unterbrochen sein. Mit einem mäanderförmigen Verlauf ist eine gegensinnige regelmäßige Vergrößerung und Verringerung des Abstandes der beiden Gleitleisten 46 jedes Gleitleistenpaares gemeint. Die Gleitleisten 46 sind mit ihren unteren Flachseiten jeweils auf stegartigen Klemmstücken 48 abgestützt, die an ihrer Unterseite der abgeschrägten Kontur der Einhausung 30 angepasst sind und für eine stabile Abstützung der Gleitleisten 46 sorgen. Sinnvollerweise können jeweils an den Stellen des weitesten Abstandes sowie des geringsten Abstandes der jeweiligen Paare der Gleitleisten 46 Klemmstücke 48 zur Auflage und Abstützung vorgesehen sein (vgl. Fig. 3b).

Auch bei dieser Variante ist die Förderkette 14 in ausreichendem Abstand zu den Strömungsleitflächen 28 sowie der Einhausung 30 angeordnet, so dass sich ein gewünschter Strömungsverlauf 44 mit der durch die Förderkette 14, zwischen den Gleitleisten 46 und den Klemmstücken 48 nahezu ungehindert abgeführten Feuchtigkeit ergibt. Gleichzeitig ist der Innenraum der Einhausung 30 zwischen den Oberflächen 32 und den senkrechten Seitenflächen 42 mitsamt dem darin geführten Untertrum 24 der Förderkette 14 in optimaler Weise von dem Strömungsverlauf 44 und der abgeführten Feuchtigkeit abgeschirmt.

### Bezugszeichenliste

- 8: Transportstrecke, Trocknungsstrecke
- 10: Reihe
- 12: Flaschen
- 14: Förderkette
- 16: Abblaseinrichtung
- 18: Luftströmung
- 20: Flaschenboden
- 22: verwirbelte Luft
- 24: Untertrum
- 26: Oberseite
- 28: Strömungsleitflächen
- 30: Einhausung
- 32: geneigte Oberfläche
- 34: Distanzelement
- 36: Gleitleiste
- 38: Trennstelle
- 40: Stützstempel
- 42: senkrechte Seitenfläche
- 44: Strömungsverlauf
- 46: Gleitleisten (paarweise)
- 48: Klemmstück

## Patentansprüche

1. Transport- und Trocknungsstrecke (8) für einzeln, zu mehreren gruppiert und/oder in größerer Anzahl hintereinander und/oder nebeneinander beförderte, zumindest teilweise mit außen anhaftender Feuchtigkeit und/oder Flüssigkeitstropfen
beaufschlagte Artikel, die auf einem Gliederförderer stehen und dabei mit
anströmender Trocknungsluft beaufschlagt sind, wobei der Gliederförderer eine weitgehend ebene, sich bewegende Auflageebene für die Artikel bildet, die zumindest teilweise für die seitlich und/oder von oben anströmende Trocknungsluft durchlässig ist und an deren Unterseite Strömungsleitflächen (28), in einem definierten Abstand zur Unterseite,
zur weitgehend ungehinderten Ableitung der feuchten, die Flüssigkeit der zu
trocknenden Artikel tragenden Trocknungsluft angeordnet sind, wobei die
Strömungsleitflächen (28) Teil einer Einhausung (30) für einen unterhalb einer Auflageebene für die Artikel zurücklaufenden Abschnitt des Gliederförderers sind,
und wobei der die Artikel tragende Abschnitt des Gliederförderers mittels
Distanzelementen (34) auf einer Oberseite der Einhausung (30) bzw. auf den Strömungsleitflächen (28) abgestützt ist, wobei die
Einhausung (30) eine dachförmige Oberseite aufweist, deren nach unten geneigte Oberflächen (32) als Strömungsleitflächen (28) fungieren, **dadurch gekennzeichnet, dass** die nach unter geneigten Oberflächen (32) auch als Auflageflächen für die den Gliederförderer tragenden Distanzelemente (34) fungieren.

2. Strecke nach Anspruch 1, bei der an der dachförmigen Oberseite der Einhausung (30) wenigstens eine Gleitschiene (36, 46) zur Führung der Distanzelemente (34) angeordnet ist.

3. Strecke nach Anspruch 2, bei der die geradlinig oder in Längsrichtung mäanderförmig ausgebildete Gleitschiene (36, 46) mehrfach und/oder in regelmäßigen Abständen in Querrichtung unterbrochen ist.

4. Strecke nach einem der Ansprüche 2 bis 3, bei der die wenigstens eine Gleitschiene (36, 46) den Gliederförderer trägt und die Distanzelemente (34) bildet.

## Claims

1. Conveyor and drying line (8) for articles being conveyed individually, in groups of several articles and/or as a plurality of articles being conveyed one after the other in a row and/or side by side, the articles being at least partly impinged with humidity and/or with liquid drops on their outer surface, said articles standing on a chain link conveyor and being impinged with a flow of drying air, wherein the chain link conveyor forms a substantially planar, moving support plane for the articles, said support plane being at least partly permeable for the drying air flowing through from the sides and/or from the top, and having flow-guiding surfaces (28) arranged at the underside of the said support plane, at a defined distance from the underside, said flow-guiding surfaces (28) serving for the largely unhindered discharge of the drying air which has become humid after having absorbed the liquid from the articles to be dried, wherein the flow-guiding surfaces (28) are part of an enclosure (30) covering a section of the chain link conveyor returning below the support plane for the articles, and wherein the section of the chain link conveyor carrying the articles is supported on an upper side of the enclosure (30) or on the flow-guiding surfaces (28) by means of distance elements (34), and wherein the enclosure (30) has a roof-shaped upper side, with the surfaces (32) of the roof shaped upper side inclining downwards and functioning as flow-guiding surfaces (28), **characterised in that** the downwardly inclined surfaces (32) also function as support surfaces for the distance elements (34) supporting the chain link conveyor.

2. Conveyor and drying line according to claim 1 comprising at least one slide rail (36, 46) for guiding the distance elements (34), wherein the slide rail (36, 46) is arranged on the roof-shaped upper side of the enclosure (30).

3. Conveyor and drying line according to claim 2 wherein the slide rail (36, 46) is straight or meandering in longitudinal direction and wherein said slide rail (36, 46) is interrupted at multiple and/or regular intervals in a transverse direction.

4. Conveyor and drying line according to one of the claims 2 to 3 wherein the at least one slide rail (36, 46) supports the chain link conveyor and forms the distance elements (34).

## Revendications

1. Section de transport et de séchage (8) pour des articles qui sont transportés individuellement, de manière regroupée à plusieurs et/ou en un nombre plus important les uns derrière les autres et/ou les uns à côté des autres et présentent, au moins en partie, de l'humidité et/ou des gouttes de liquide adhérant sur la face extérieure et qui sont placés sur un convoyeur à maillons tout en étant alimentés en air de séchage incident, ledit convoyeur à maillons formant un plan d'appui pour lesdits articles qui est dans une large mesure plat et est en mouvement et qui est, au moins partiellement, perméable à l'air de séchage arrivant latéralement et/ou d'en haut et sur la face inférieure duquel, à une distance définie de ladite face inférieure, sont disposées des faces de guidage d'écoulement (28) destinées à dériver, dans une large mesure librement, l'air de séchage humide portant le liquide des articles à sécher, lesdites faces de guidage d'écoulement (28) font partie d'un abri (30) pour un tronçon du convoyeur à maillons, qui est en mouvement de retour au-dessous d'un plan d'appui pour les articles, et ledit tronçon du convoyeur à maillons, qui porte lesdits articles étant appuyé par le biais d'éléments d'écartement (34) sur une face supérieure dudit abri (30) ou bien sur lesdites faces de guidage d'écoulement (28), ledit abri (30) présentant une face supérieure en forme de toit dont les surfaces inclinées vers le bas (32) font fonction de faces de guidage d'écoulement (28), **caractérisée par le fait que** les surfaces inclinées vers le bas (32) font fonction également de surfaces d'appui pour lesdits éléments d'écartement (34) supportant le convoyeur à maillons.

2. Section selon la revendication 1, dans laquelle au moins une glissière (36, 46) de guidage desdits éléments d'écartement (34) est disposée sur la face supérieure en toit de l'abri (30).

3. Section selon la revendication 2, dans laquelle la glissière (36, 46) réalisée de façon rectiligne ou, dans la direction longitudinale, en méandre, est interrompue à plusieurs reprises et/ou à intervalles réguliers dans la direction transversale.

4. Section selon l'une quelconque des revendications 2 à 3, dans laquelle ladite au moins une glissière (36, 46) porte ledit convoyeur à maillons et forme lesdits éléments d'écartement (34).
